# EUROPEAN PATENT SPECIFICATION

(11) **EP 1 749 689 B1**
(45) Date of publication and mention of the grant of the patent: **16.06.2010**
(21) Application number: 06116872.0
(22) Date of filing: 10.07.2006
(51) Int. Cl.: B60K 37/06

(54) **Control panel for a tractor**
Bedienungsfeld für einen Traktor
Tableau de commande pour un tracteur

(30) Priority: 25.07.2005 GB 0515101
(43) Date of publication of application: 07.02.2007
(73) Proprietor: CNH Österreich GmbH, 4300 St. Valentin (AT)
(72) Inventor: Haas, Werner, 4470, Enns (AT); Huber, Karl, 4111, Walding (AT)
(74) Representative: CNH IP Department

(56) References cited:
- EP-A- 1 431 866
- EP-A1- 0 200 612
- EP-A1- 0 807 373
- WO-A2-99/06987
- FR-A1- 2 428 315
- GB-A- 2 296 108
- US-B1- 6 935 434

## Description

The present invention relates to a control panel for a tractor having a plurality of control devices mounted on a support plate. The invention finds particular application in agricultural machines, such as tractors and harvesters.

In a tractor, the control panel can prove confusing because of the large number of functions that are under the control of the operator. Switches are often labelled to indicate their function but an inexperienced operator may still have to spend time to search the control panel for a particular control. At best, this can be very distracting and on some occasions it may even prove dangerous. Furthermore, the labels may not be clearly legible under all lighting conditions, thereby adding to the confusion.

GB 2.023.935 describes a switching device having a pictorial diagram, showing the top view of a car, printed on it. Arrows are located in the vicinity of the representation of the windows of the car. Upon pressing the downwards orientated arrow, the window corresponding to the pictorially represented window will open. When pressing the upward arrow, the corresponding window will close. Thus, electric switches are located on the switching device at a position relative to the markings which corresponds to the location on the car of the function controlled by the switches.

US 6,935,434, on which the preamble of claim 1 is based, relates to a hitch control system having a display unit which includes a controller, a display and a rotary encoder. The rotary encoder is controlled by a rotary control knob. Further input is given to the controller by pressing a number of switches. The switches and the rotary control knob are mounted on the control panel itself. However, the control panel has no visual representation of the machine and the switches and rotary control knob are mounted at random on the control panel. When the driver needs to locate the switches, he will need to look for them and memorise where each switch is placed on the control panel.

The present invention seeks therefore to provide a control panel that directs an experienced operator intuitively to the control device associated with any particular function.

According to the present invention, there is provided a control panel for a tractor having a plurality of control devices mounted on a support plate, the support plate additionally carries markings which visually represent the appearance of the tractor and each control device is located on the support panel at a position relative to the markings which corresponds to the location on the tractor of the function controlled by the device, wherein a rotary electronic draft control device is provided at the visual representation of a rear wheel of the tractor.

An operator of a machine having a control panel of the invention will be presented with a visual image of the machine. Functions under control of the operator will each be associated with a part of the tractor and in the invention the controls for the functions are positioned in relation to the displayed image where the operator would intuitively expect to find them. Thus, in the case of a tractor, controls for such items as a front hitch would be found by the front of the image of the tractor and the control for the rear power take off (PTO) shaft would be by the image of the rear of the vehicle.

In the case of a tractor, a rotary electronic draft control device may conveniently itself act as the visual representation of the rear wheel of the tractor.

If desired, display devices may additionally be provided on the control panel to display the current status of functions controlled by the control devices, each display device being located at a position relative to the visual markings which corresponds to the location on the machine of the function of which the status is displayed by the device.

In a preferred embodiment of the invention, the control panel is constructed as a printed circuit board serving as a foil keyboard and having touch sensitive areas that act as switches and buttons.

Advantageously, the control panel further includes a front foil made of an electro luminescent (EL) material permitting the switches and buttons to be illuminated.

Conveniently, each switch may have a unique EL backlighting feature identifying the function served by the switch and may also have an EL border line outlining the touch sensitive area of the switch.

The panel may further be contoured or embossed to allow the position of switches and buttons to be determined by touch. A metal dome may also be included to allow each switch to provide tactile feedback that it has been depressed.

In this way, the preferred embodiment of the invention provides a visually appealing and ergonomically designed control panel that avoids the need for labels and simplifies the tasks of identifying the function served by each control device and finding a control for any function.

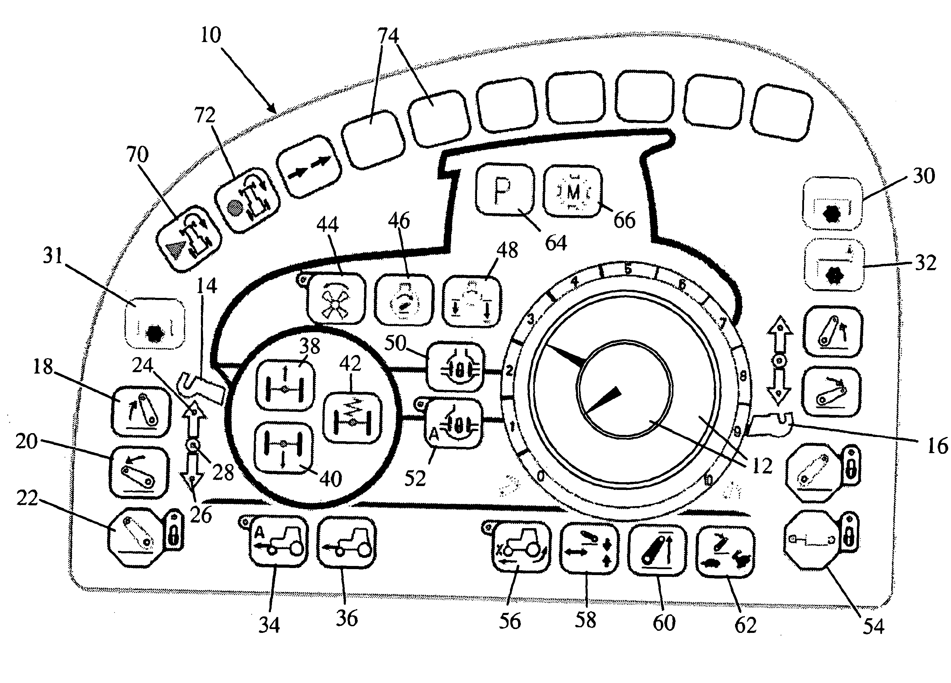

The invention will now be described further, by way of example, with reference to the accompanying drawing which is a representation of a control panel for a tractor constructed in accordance with the invention.

The control panel 10 has a front EL foil which displays the illustrated image when illuminated. The image includes a representation of a tractor and rotary EDC (electronic draft control) potentiometer 12 is mounted within the rear tyre of the displayed image. Aside from this rotary potentiometer, and some display LED's nothing protrudes from the surface of the panel.

The foil is itself contoured or embossed so that the various buttons and switches described below can be felt as well as seen. As can be noted from the drawing, each button has an illuminated rim and a central icon. These features and their positioning on the control panel serve to identify the functions served by the various buttons and LED's, avoiding the need for labelling.

A metal dome may be used at each switch position to provide tactile feedback to the operator when a button has been sufficiently depressed to activate it.

The exact nature of the buttons presented and the functions that they serve will naturally vary from machine to machine. It is not therefore deemed necessary to provide a detailed description of each of the buttons illustrated in the drawing, especially as such controls are conventional and present in existing tractors, albeit in a different form. The buttons will therefore only be described to the extent that is necessary to demonstrate that their identification will be intuitive to even an inexperienced operator.

The image of the tractor includes front and rear hitches 14 and 16. Adjacent the image of the front hitch 14 is a button 18 for raising the front hitch, a button 20 for lowering it and a button 22 for locking it in position. The button 22 is a master switch for disabling the switches 18 and 20 and its icon includes a small padlock. Also associated with the front hitch are three LED's 24, 26 and 28 and two arrows which indicate respectively that the front hitch is being raised, being lowered, or is locked in a fixed position.

The function of similar control buttons and status LED's associated with the rear hitch 16 will be self-evident from the description of the front hitch.

The buttons 30 and 32 at the rear of the tractor are used to control the power take off shaft, the button 30 being an ON/OFF button and the button 32 for an AUTO mode of the take off shaft. A button 31 similar to the button 30 acts as an ON/OFF switch for the front PTO shaft.

The buttons 34 and 36 positioned near the image of the front wheel of the tractor are to select the four wheel drive (4WD) mode, the button 36 selecting 4WD at all times and the button 34 being for automatic selection of 4WD when the driving conditions require it.

Within the image of the front wheel, three buttons 38, 40 and 42 control the front suspension, acting to raise, lower and suspend the front axle, respectively.

Button 44 is for reversing the direction of the fan, this being required on occasions to clean the radiator.

Button 46 is for manually reducing the engine speed and button 48 sets the rate at which the engine speed drops with increased load. Being associated with the operation of the engine, the buttons 44, 46 and 48 are naturally to be found in the image of the engine compartment.

The two buttons 50 and 52 positioned in the image of the transmission are for the purpose of locking the differential or placing the differential in an automatic mode in which it will lock when the driving conditions require it.

The button 54 at the rear of the tractor displaying the icon of a lifting cylinder is provided for locking the electro-hydraulic remotes.

The image of the rear wheel contains a rotary potentiometer 12 and is associated with four buttons all of which are concerned with draft control. When the rear hitch is connected to a plough, the plough can be raised and lower either to maintain a constant ploughing depth or a constant draft, i.e. a constant drag on the tractor. The potentiometer 12 is used in conjunction with the button 56 to set the permissible wheel slip, in conjunction with button 58 to proportion between draft control and depth control, in conjunction with the button 60 to set the maximum and minimum heights of the rear hitch and in conjunction with the button 62 to set the response speed of the EDC.

The potentiometer 12 in the illustrated embodiment has two rotary controls to set maximum and minimum values of the relevant parameters but one could of course have separate buttons to allow a single potentiometer to set both minimum and maximum values.

A button 64 is provided in the image of the cab to activate a parking lock and a further button 66 is to select the drive strategy (for example field or road mode).

In addition to the buttons described above, which are clearly associated with a location within the vehicle, additional buttons such as the buttons 70 and 72 may be provided to control auxiliary features, these buttons being shown as operating a head turning sequence (HTS). These are effectively buttons which repeat a taught sequence of operations in particular the adjustment of speed and raising and lowering of a plough as the tractor approaches an edge of a field.

It will be appreciated that the control panel is in many ways analogous to a computer keyboard and that the functions performed by the various buttons are dictated by software. Because of this, a single potentiometer can be used to set a variety of parameters if it is associated with buttons which select the function that it serves at any one time.

The buttons 74 after the HTS buttons 72, which are shown as being unmarked, are spare and intended to enable additional functions to be added to a control panel to customise it for any individual machine. It is for example possible to make provision for a film, which carries the symbols associated with the additional buttons, to be laid over the control panel. The electric circuits for sensing actuation of these additional buttons are already build into the control panel and apart from labelling the buttons, such as by the overlay film proposed above, the only other changes required can be implemented in software. Examples of functions to be controlled by these additional buttons are hydraulic stabilizers, a hydraulic lift rod and an electronically controlled front hitch. In this way, it is not only possible to customise a new control panel but a function can be added to an existing control panel, permitting it to be upgraded instead of it needing to be replaced.

## Claims

1. A control panel (10) for a tractor having a plurality of control devices mounted on a support plate, the support plate additionally carries markings which visually represent the appearance of the tractor and each control device is located on the support panel at a position relative to the markings which corresponds to the location on the tractor of the function controlled by the device
**characterized in that** a rotary electronic draft control device (12) is provided at the visual representation of a rear wheel of the tractor.

2. A control device as claimed in claim 1, wherein a plurality of buttons (56, 58, 60, 62) are associated with the rear wheel of the tractor to enable selection of the control parameter adjusted by turning the rotary electronic draft control device (12).

3. A control panel as claimed in any preceding claim, wherein display devices (24, 26, 28) are additionally provided on the control panel to display the current status of functions controlled by the control devices, each display device being located at a position relative to the visual markings which corresponds to the location on the tractor of the function of which the status is displayed by the device.

4. A control panel as claimed in any preceding claim, wherein the control panel is constructed as a printed circuit board serving as a foil keyboard and having touch sensitive areas that act as switches and buttons.

5. A control panel as claimed in claim 4, further including a front foil made of an electro luminescent material permitting the switches and buttons to be illuminated.

6. A control panel as claimed in claim 4 or 5, wherein each switch has a unique EL backlighting feature identifying the function served by the switch.

7. A control panel as claimed in any of the claims 4 to 6, wherein a film is laid over the control panel and carries an image for identifying the function served by an otherwise unmarked switch on the control panel.

8. A control panel as claimed in any of the claims 4 to 7, wherein each switch further includes a border line outlining the touch sensitive area of the switch.

9. A control panel as claimed in any preceding claim, wherein the panel is contoured or embossed to allow the position of switches and buttons to be determined by touch.

10. A control panel as claimed in any preceding claim, wherein the rotary electronic control device is a potentiometer (12), the potentiometer (12) having at least one rotary control to set maximum and minimum values of at least one control device.

11. A control panel as in any preceding claim, wherein the rotary electronic draft control device (12) itself acts as the visual representation of the rear wheel of the tractor

## Patentansprüche

1. Bedienfeld (10) für einen Traktor mit einer Vielzahl von auf einer Trägerplatte befestigten Steuereinrichtungen, wobei die Trägerplatte zusätzlich Markierungen trägt, die visuell das Aussehen des Traktors darstellen, und jede Steuereinrichtung auf der Trägerplatte an einer Position bezüglich der Markierungen angeordnet ist, die der Lage der von der Einrichtung gesteuerten Funktion auf dem Traktor entspricht;
**dadurch gekennzeichnet, dass** eine rotierende elektronische Zugkraft-Steuereinrichtung (12) an der visuellen Darstellung eines Hinterrades des Traktors vorgesehen ist.

2. Bedienfeld nach Anspruch 1, bei dem eine Vielzahl von Auswahlknöpfen (56, 58, 60, 62) im Hinterrad des Traktors zugeordnet sind, um die Auswahl des Steuerparameters zu ermöglichen, der durch Drehen der rotierenden elektronischen Zugkraft-Steuereinrichtung (12) eingestellt wird.

3. Bedienfeld nach einem der vorhergehenden Ansprüche, bei dem Anzeigeeinrichtungen (24, 26, 28) zusätzlich auf dem Bedienfeld vorgesehen sind, um den derzeitigen Status von Funktionen anzuzeigen, die von den Steuereinrichtungen gesteuert werden, wobei jede Anzeigeeinrichtung an einer Position bezüglich der visuellen Markierungen angeordnet ist, die der Position der Funktion, deren Status durch die Einrichtung angezeigt wird, auf dem Traktor entspricht.

4. Bedienfeld nach einem der vorhergehenden Ansprüche, bei dem das Bedienfeld als eine gedruckte Leiterplatte aufgebaut ist, die als Folientastatur dient und druckempfindliche Bereiche aufweist, die als Schalter und Knöpfe wirken.

5. Bedienfeld nach Anspruch 4, dass weiterhin eine vordere Folie einschließt, die aus einem elektrolumineszenten Material hergestellt ist und eine Beleuchtung der Schalter und Knöpfe ermöglicht.

6. Bedienfeld nach einem der Ansprüche 4 oder 5, bei der jeder Schalter ein einzigartiges elekrolumineszentes Hintergrundbeleuchtungs-Merkmal aufweist, das die von dem Schalter erfüllte Funktion identifiziert.

7. Bedienfeld nach einem der Ansprüche 4 bis 6, bei der eine Folie über dem Bedienfeld angeordnet ist und ein Bild zur Identifikation der Funktion trägt, die von einem im übrigen nicht markierten Schalter auf dem Bedienfeld erfüllt wird.

8. Bedienfeld nach einem der Ansprüche 4 bis 7, bei der jeder Schalter weiterhin eine Umrandungslinie einschließt, die den druckempfindlichen Bereich des Schalters umreißt.

9. Bedienfeld nach einem der vorhergehenden Ansprüche, bei dem das Bedienfeld konturiert oder geprägt ist, um die Erkennung der Position der Schalter und Knöpfe durch Berührung zu ermöglichen.

10. Bedienfeld nach einem der vorhergehenden Ansprüche, bei dem die rotierende elektrische Steuereinrichtung ein Potentionmeter (12) ist, wobei das Potentionmeter (12) zumindest eine Drehsteuerung aufweist, um maximale und minimale Werte von zumindest einer Steuereinrichtung einzustellen.

11. Bedienfeld nach einem der vorhergehenden Ansprüche, bei der die rotierende elektronische Zugkraft-Steuereinrichtung (12) als solche als visuelle Darstellung des Hinterrades des Traktors wirkt.

## Revendications

1. Tableau de commande (10) pour un tracteur comportant une pluralité de dispositifs de commande montés sur une plaque de support, la plaque de support portant en plus des marquages qui représentent visuellement l'aspect du tracteur et chaque dispositif de commande étant situé sur le tableau de commande à une position par rapport aux marquages qui correspond à l'emplacement sur le tracteur de la fonction commandée par le dispositif,
**caractérisé en ce qu'**un dispositif de commande de tirage électronique rotatif (12) est fourni sur la représentation visuelle d'une roue arrière du tracteur.

2. Tableau de commande selon la revendication 1, **caractérisé en ce qu'**une pluralité de boutons (56, 58, 60, 62) est associée à la roue arrière du tracteur pour permettre une sélection du paramètre de commande réglé en tournant le dispositif de commande de tirage électronique rotatif (12).

3. Tableau de commande selon l'une quelconque des revendications précédentes, **caractérisé en ce que** des visuels (24, 26, 28) sont prévus en plus sur le tableau de commande pour indiquer l'état en cours des fonctions commandées par les dispositifs de commande, chaque visuel étant situé à une position par rapport aux marquages visuels qui correspond à la position sur le tracteur de la fonction dont l'état est affiché par le visuel.

4. Tableau de commande selon l'une quelconque des revendications précédentes, **caractérisé en ce que** le tableau de commande est construit comme une carte de circuit imprimé servant de clavier à effleurement et ayant des surfaces tactiles qui agissent comme des commutateurs et des boutons.

5. Tableau de commande selon la revendication 4, comprenant en plus une feuille frontale constituée d'un matériau électroluminescent permettant aux commutateurs et aux boutons d'être éclairés.

6. Tableau de commande selon la revendication 4 ou 5, **caractérisé en ce que** chaque commutateur a une caractéristique unique de rétro-éclairage électroluminescent identifiant la fonction exercée par le commutateur.

7. Tableau de commande selon l'une quelconque des revendications 4 à 6, **caractérisé en ce qu'**un film est posé sur le tableau de commande et porte une image pour identifier la fonction exercée par un commutateur non repéré par ailleurs sur le tableau de commande.

8. Tableau de commande selon l'une quelconque des revendications 4 à 7, **caractérisé en ce que** chaque commutateur comprend en plus une ligne de limite traçant la surface tactile du commutateur.

9. Tableau de commande selon l'une quelconque des revendications précédentes, **caractérisé en ce que** le tableau est profilé ou estampé pour permettre de déterminer la position des commutateurs ou des boutons par contact.

10. Tableau de commande selon l'une quelconque des revendications précédentes, **caractérisé en ce que** le dispositif de commande électronique rotatif est un potentiomètre (12), le potentiomètre (12) comportant au moins une commande rotative pour régler des valeurs maximale et minimale d'au moins un dispositif de commande.

11. Tableau de commande selon l'une quelconque des revendications précédentes, **caractérisé en ce que** le dispositif de commande de tirage électronique rotatif (12) agit lui-même tel qu'il est indiqué sur la représentation visuelle de la roue arrière du tracteur.
